(19) Europäisches Patentamt
European Patent Office
Office européen des brevets

(11) EP 4 015 545 B1

(12) EUROPEAN PATENT SPECIFICATION

(45) Date of publication and mention of the grant of the patent:
**29.05.2024 Bulletin 2024/22**

(21) Application number: **20870887.5**

(22) Date of filing: **24.09.2020**

(51) International Patent Classification (IPC):
***C08K 3/08*** (2006.01) ***C08K 5/00*** (2006.01)
***F16F 1/36*** (2006.01) ***C08L 33/08*** (2006.01)
***C08F 4/34*** (2006.01) ***C09K 3/10*** (2006.01)
***F16J 15/10*** (2006.01) ***C08F 220/18*** (2006.01)

(52) Cooperative Patent Classification (CPC):
(C-Sets available)
**C08F 4/34; C08F 220/1802; C08K 3/08; C08K 5/0025; C08L 33/08; C09K 3/1006; F16J 15/102;** C09K 2200/0625; F16F 1/3605; F16F 2224/025 (Cont.)

(86) International application number:
**PCT/JP2020/036021**

(87) International publication number:
**WO 2021/065669 (08.04.2021 Gazette 2021/14)**

(54) **ACRYLIC RUBBER, CROSSLINKABLE RUBBER COMPOSITION, AND RUBBER CURED PRODUCT**

ACRYLKAUTSCHUK, VERNETZBARE KAUTSCHUKZUSAMMENSETZUNG UND GEHÄRTETES KAUTSCHUKPRODUKT

CAOUTCHOUC ACRYLIQUE, COMPOSITION DE CAOUTCHOUC RÉTICULABLE, ET PRODUIT DURCI EN CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2019 JP 2019178882**

(43) Date of publication of application:
**22.06.2022 Bulletin 2022/25**

(73) Proprietor: **Denka Company Limited**
**Tokyo 103-8338 (JP)**

(72) Inventors:
- **KAMBE, Yuya**
  **Tokyo 103-8338 (JP)**
- **MIYAUCHI, Toshiaki**
  **Tokyo 103-8338 (JP)**

(74) Representative: **Hoffmann Eitle**
**Patent- und Rechtsanwälte PartmbB**
**Arabellastraße 30**
**81925 München (DE)**

(56) References cited:
**WO-A1-2009/099113**
**WO-A1-2018/143101**
**WO-A1-2019/078167**
**WO-A1-2019/078167**
**WO-A2-2010/065858**
**JP-A- H0 641 238**
**JP-A- 2001 192 420**
**JP-A- 2010 070 713**
**JP-A- 2010 070 713**
**JP-A- 2012 193 344**
**US-A- 5 191 050**

EP 4 015 545 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/1802, C08F 220/1804, C08F 210/02, C08F 222/16;**
**C08K 3/08, C08L 33/08;**
**C08K 5/0025, C08L 33/08;**
C08F 220/1802, C08F 220/1804, C08F 222/1063, C08F 222/16;
C08F 220/1802, C08F 220/1804, C08F 222/16, C08F 222/102

## Description

### Technical Field

The present invention relates to an acrylic rubber, a crosslinkable rubber composition and cured rubber products.

### Background Art

Acrylic rubber is known as a rubber material having excellent heat and oil resistance, and a cured product obtained by curing a rubber composition containing acrylic rubber is suitably used for various applications such as automotive parts (for example, Patent Documents 1-3).

### Citation List

### Patent Document

[Patent Document 1] Japanese Unexamined Patent Application Publication No. 2002-265737
[Patent Document 2] Japanese Unexamined Patent Application Publication No. 2010-70713
[Patent Document 3] Patent Application Publication WO 2019/078167. WO 2019/078167 relates to a method for producing an acrylic rubber, comprising the steps of dividedly adding 80% to 100% by mass of the total mass of a monomer component containing 100 parts by mass of an acrylic acid alkyl ester having an alkyl group having 1 to 3 carbon atoms, 20 to 160 parts by mass of an acrylic acid alkyl ester having an alkyl group having 4 to 8 carbon atoms, and 0.1 to 10 parts by mass of a crosslinking seat monomer containing a carboxyl group, and performing emulsion polymerization at a polymerization temperature of 20° C. to 60° C.

### Summary of Invention

### Technical Problem

In recent years, further heat resistance has been required for automotive rubber member for example due to exhaust gas regulation measures, and higher engine output. In particular, there is a need for a rubber material that can maintain its properties even when held in a high temperature environment for a long time.

An object of the present invention is to provide a cured rubber product that can maintain a high tensile strength even when held in a high temperature environment for a long time. Another object of the present invention is to provide an acrylic rubber that can realize the cured rubber product described above, and a crosslinked rubber composition containing the acrylic rubber.

### Solution to Problem

An aspect of the present invention relates to an acrylic rubber comprising: an alkyl acrylate unit; a crosslinking monomer unit having a halogeno group, an epoxy group, or a carboxyl group; a unit of a bifunctional monomer represented by the following formula (A-1):

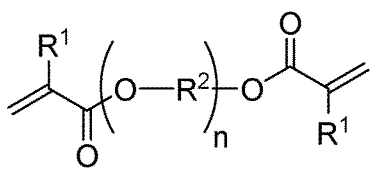

(A-1)

wherein n represents 1 to 9, $R^1$ represents a hydrogen atom or a methyl group, and $R^2$ represents an alkanediyl group having 2 to 4 carbon atoms; and an ethylene unit, wherein a content of the ethylene unit is 0.1 to 10 parts by mass with respect to 100 parts by mass of the alkyl acrylate unit,

wherein the acrylic rubber has a toluene insoluble content of 4 to 40% by mass. The toluene insoluble content is calculated from the following equation:

$$\text{toluene insoluble content (\% by mass)} = (x / 0.2) \times 100$$

wherein x (g) is the dried solid content (toluene insoluble content) which is weighed by immersing 0.2 g of the acrylic rubber in toluene in 100ml, leaving it at 23°C for 24 hours, filtering it using a 200 mesh wire netting, and drying the filter cake at 120°C for 1 hour.

In an aspect, the alkyl acrylate unit may comprise a first alkyl acrylate unit having an alkyl group having 1 to 3 carbon atoms and a second alkyl acrylate unit having an alkyl group having 4 to 8 carbon atoms.

In an aspect, a content of the first alkyl acrylate unit may be 60 to 95% by mass and a content of the second alkyl acrylate may be 5 to 40% by mass, based on the total amount of the alkyl acrylate unit.

In an aspect, a content of the unit of the bifunctional monomer may be 0.1 to 5 parts by mass with respect to 100 parts by mass of the alkyl acrylate unit.

In an aspect, a content of the crosslinking monomer unit may 0.5 to 10 parts by mass with respect to 100 parts by mass of the alkyl acrylate unit.

The content of the ethylene unit is 0.1 to 10 parts by mass with respect to 100 parts by mass of the alkyl acrylate unit.

Another aspect of the present invention relates to a crosslinkable rubber composition comprising: the above acrylic rubber; a crosslinking agent; and a filler.

In an aspect, the filler may comprise a carbon black.

Another aspect of the present invention relates to a cured rubber product that is a cured product of the above crosslinkable rubber composition.

The present also relates to a hose member, a seal member and a vibration-proofing rubber member which comprise the above cured rubber product.

## Advantageous Effects of Invention

According to the present invention, a cured rubber product that can maintain a high tensile strength even when held in a high temperature environment for a long time can be provided. In addition, according to the present invention, an acrylic rubber that can realize the cured rubber product described above, and a crosslinked rubber composition containing the acrylic rubber can be provided.

## Description of Embodiments

Embodiments of the present invention will be described in detail.

(Acrylic rubber)

The acrylic rubber according to the present embodiment contain an alkyl acrylate unit, a crosslinking monomer unit, a unit of a bifunctional monomer represented by the following formula (A-1) (hereinafter also referred to as "bifunctional monomer unit"), and an ethylene unit.

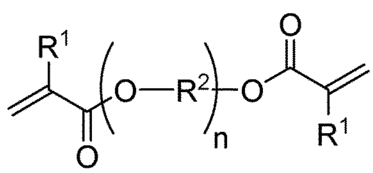
(A-1)

In the formula (A- 1), n represents 1 to 9, $R^1$ represents a hydrogen atom or a methyl group, and $R^2$ represents an alkanediyl group having 2 to 4 carbon atoms.

The acrylic rubber according to the present embodiment has a structural unit derived from the bifunctional monomer in which two (meth)acryloyl groups are bonded by the specific linking chain. Since the bifunctional monomer forms a specific crosslinked structure containing a polyether chain having high mobility in the acrylic rubber, the acrylic rubber according to the present embodiment can realize a cured rubber product that can maintain a high tensile strength even when held in a high temperature environment for a long time.

The alkyl acrylate unit is a structural unit derived from an alkyl acrylate. The alkyl acrylate may be, for example, an alkyl acrylate having an alkyl group having 1 to 12 carbon atoms, and is preferably an alkyl acrylate having an alkyl group having 1 to 8 carbon atoms.

The alkyl acrylate unit may contain a structural unit derived from a first alkyl acrylate having an alkyl group having 1 to 3 carbon atoms (first alkyl acrylate unit), and a structural unit derived from a second alkyl acrylate having an alkyl group having 4 to 8 carbon atoms (second alkyl acrylate unit).

Examples of the first alkyl acrylate include methyl acrylate, ethyl acrylate, n-propyl acrylate, and isopropyl acrylate.

Examples of the second alkyl acrylate include n-butyl acrylate, isobutyl acrylate, n-pentyl acrylate, isoamyl acrylate, n-hexyl acrylate, 2-methylpentyl acrylate, n-octyl acrylate, and 2-ethylhexyl acrylate.

The content of the first alkyl acrylate unit is preferably 60% by mass or more, more preferably 70% by mass or more, and still more preferably 80% by mass or more, based on the total amount of the alkyl acrylate unit. This further improves the oil resistance of the cured rubber product. The content of the first alkyl acrylate unit is preferably 95% by mass or less, more preferably 93% by mass or less, and still more preferably 90% by mass or less, based on the total amount of the alkyl acrylate unit. This improves the cold resistance of the cured rubber product.

The content of the second alkyl acrylate unit is preferably 5% by mass or more, more preferably 7% by mass or more, and still more preferably 10% by mass or more, based on the total amount of the alkyl acrylate unit. This improves the cold resistance of the cured rubber product. The content of the second alkyl acrylate unit is preferably 40% by mass or less, more preferably 30% by mass or less, and still more preferably 20% by mass or less, based on the total amount of the alkyl acrylate unit. This further improves the oil resistance of the cured rubber product.

The content of alkyl acrylate unit in the acrylic rubber may be, for example, 80% by mass or more, preferably 90% by mass or more, and more preferably 93% by mass or more, based on the total amount of the acrylic rubber. The content of the alkyl acrylate unit in the acrylic rubber may be, for example, 99% by mass or less, preferably 97% by mass or less, and more preferably 95% by mass or less, based on the total amount of the acrylic rubber.

The crosslinking monomer unit is a structural unit derived from a crosslinking monomer. The crosslinking monomer means a monomer having a functional group forming a crosslinking site (crosslinking point). Examples of the functional group forming the crosslinking site include a halogeno group, an epoxy group, and a carboxyl group.

Examples of the crosslinking monomer having a halogeno group include 2-chloroethyl vinyl ether, 2-chloroethyl acrylate, vinyl benzyl chloride, vinyl chloroacetate, and allyl chloroacetate.

Examples of the crosslinking monomer having an epoxy group include glycidyl acrylate, glycidyl methacrylate, allyl glycidyl ether, and metaallyl glycidyl ether.

Examples of the crosslinking monomer having a carboxyl group include acrylic acid, methacrylic acid, crotonic acid, 2-pentenoic acid, maleic acid, fumaric acid, itaconic acid, butenedioic acid monobutyl ester, and cinnamic acid.

The content of the crosslinking monomer unit may be, for example, 0.3 parts by mass or more, preferably 0.5 parts by mass or more, more preferably 1.0 parts by mass or more, and still more preferably 1.5 parts by mass or more, with respect to 100 parts by mass of the alkyl acrylate unit. This tends to improve the tensile strength of the cured rubber product. The content of the crosslinking monomer unit may be, for example, 15 parts by mass or less, preferably 10 parts by mass or less, more preferably 5 parts by mass or less, and still more preferably 3 parts by mass or less, with respect to 100 parts by mass of the alkyl acrylate unit. This tends to make the cured rubber product more resilient to rubber.

The bifunctional monomer unit is a structural unit derived from a bifunctional monomer represented by the following formula (A-1).

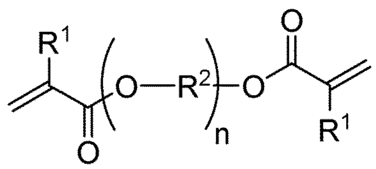 (A-1)

n is an integer of 1 to 9. From the viewpoint of further suppressing a decrease in elongation when held under a high temperature environment for a long time, n is preferably an integer of 1 to 6, and more preferably an integer of 1 to 4.

$R^1$ represents a hydrogen atom or a methyl group, preferably a methyl group.

$R^2$ represents an alkanediyl group having 2 to 4 carbon atoms, and preferably an alkanediyl group having 2 to 3 carbon atoms. Examples of the alkanediyl group include an ethylene group, a 1,2-propanediyl group, and a 1,3-propanediyl group. $R^2$ is preferably an ethylene group or a 1,2-propanediyl group.

The content of the bifunctional monomer unit may be, for example, 0.05 parts by mass or more, preferably 0.1 parts by mass or more, more preferably 0.5 parts by mass or more, and still more preferably 0.7 parts by mass or more, with respect to 100 parts by mass of the alkyl acrylate unit. This tends to result in a shorter scorch time of the crosslinkable rubber composition. The content of the bifunctional monomer unit may be, for example, 10 parts by mass or less, preferably 5 parts by mass or less, more preferably 3 parts by mass or less, and still more preferably 2.5 parts by mass or less, with respect to 100 parts by mass of the alkyl acrylate unit. This tends to maintain good elongation characteristics

even when held in a high temperature environment for a long time.

The ethylene unit is a structural unit derived from ethylene. Since the acrylic rubber contains ethylene units, the cold resistance of cured rubber products is improved.

The content of the ethylene unit may be, for example, 0.1 parts by mass or more, preferably 0.5 parts by mass or more, and more preferably 1.0 parts by mass or more, with respect to 100 parts by mass of the alkyl acrylate unit. This improves the cold resistance of the cured rubber product. The content of the ethylene unit may be, for example, 10 parts by mass or less, preferably 8 parts by mass or less, and more preferably 5 parts by mass or less, with respect to 100 parts by mass of the alkyl acrylate unit. This further improves the oil resistance of the cured rubber product.

The acrylic rubber may further contain a structural unit derived from a monomer other than the above-mentioned monomers. Other monomers include, for example, alkyl vinyl ketones such as methyl vinyl ketone; vinyl ethers such as vinyl ethyl ether; allyl ethers such as allyl methyl ether; vinyl aromatic compounds such as styrene, $\alpha$-methyl styrene, chlorostyrene, vinyl toluene, vinyl naphthalene; vinyl nitriles such as acrylonitrile, methacrylonitrile; and ethylenically unsaturated compounds such as acrylamide, propylene, butadiene, isoprene, pentadiene, vinyl acetate, vinyl chloride, vinylidene chloride, vinyl fluoride, vinylidene fluoride, ethylene, and vinyl propionate.

The content of the other monomer units may be 10 parts by mass or less, preferably 5 parts by mass or less, more preferably 1 parts by mass or less, and may be 0 parts by mass (that is, acrylic rubber may not contain other monomer units), with respect to 100 parts by mass of the alkyl acrylate unit.

The total content of the alkyl acrylate unit, the crosslinking monomer unit, the bifunctional monomer unit and the ethylene unit may be, for example, 80% by mass or more, 85% by mass or more, 90% by mass or more, 95% by mass or more, or 99% by mass or more, based the total amount of the acrylic rubber, and may be 100% by mass or more (that is, the acrylic rubber may consist of the above-mentioned units).

The toluene insoluble content of the acrylic rubber may be, for example, 4% by mass or more, preferably 10% by mass or more, and more preferably 20% by mass or more. When the toluene insoluble content is less than 4% by mass, the heat resistance improvement effect of the bifunctional monomer may not be sufficiently obtained. The toluene insoluble content of the acrylic rubber may be, for example, 40% by mass or less, preferably 38% by mass or less, and more preferably 35% by mass or less. When the toluene insoluble content exceeds 40% by mass, the extrusion processability of the acrylic rubber tends to deteriorate. The toluene insoluble content is calculated from the following equation:

$$\text{toluene insoluble content (\% by mass)} = (x / 0.2) \times 100$$

wherein x (g) is the dried solid content (toluene insoluble content) which is weighed by immersing 0.2 g of the acrylic rubber in toluene in 100ml, leaving it at 23°C for 24 hours, filtering it using a 200 mesh wire netting, and drying the filter cake at 120°C for 1 hour.

The acrylic rubber can be obtained by polymerizing a monomer corresponding to each of the above-mentioned monomer units. The polymerization method and conditions are not particularly limited, and a known method may be appropriately selected. For example, the acrylic rubber may be obtained by copolymerizing the above-mentioned monomers by a known method such as a emulsion polymerization, a suspension polymerization, a solution polymerization, and a bulk polymerization.

(Crosslinkable rubber composition)

The crosslinkable rubber composition according to this embodiment contains the above-described acrylic rubber, a crosslinking agent, and a filler.

The crosslinking agent may be any crosslinking agent capable of crosslinking the acrylic rubber. As the crosslinking agent, a known crosslinking agent capable of crosslinking by using the functional group of the crosslinking monomer unit as a crosslinking point can be used without any particular limitation.

For example, when a monomer having a carboxyl group is used as the crosslinking monomer, a polyamine compound (more preferably a crosslinking system to which a guanidine compound is added) is preferably used as the crosslinking agent. When a monomer having an epoxy group is used as the crosslinking monomer, an imidazole compound is preferably used as the crosslinking agent.

Examples of the polyamine compound include aromatic polyamine compounds such as 4,4'-bis(4-aminophenoxy) biphenyl, 4,4'-diaminodiphenyl sulfide, 1,3-bis(4-aminophenoxy)-2,2-dimethylpropane, 1,3-bis(4-aminophenoxy) benzene, 1,4-bis(4-aminophenoxy) benzene, 1,4-bis(4-aminophenoxy) pentane, 2,2-bis[4-(4-aminophenoxy)phenyl] propane, 2,2-bis[4-(4-aminophenoxy)phenyl] sulfone, 4,4'-diaminodiphenyl sulfone, bis(4-3-aminophenoxy) phenyl sulfone, 2,2-bis[4-(4-aminophenoxy) phenyl] hexafluoropropane, 3,4'-diaminodiphenyl ether, 4,4'-diaminodiphenyl ether, 4,4'-diaminobenzanilide, and bis[4-(4-aminophenoxy) phenyl] sulfone; aliphatic polyamine compounds such as hexamethylenediamine, hexamethylenediamine carbamate, N,N'-dicinnamylidene-1,6-hexanediamine, diethylenetriamine, triethylenetetramine, and tetraethylenepentamine.

Examples of the guanidine compound include guanidine, tetramethylguanidine, dibutylguanidine, diphenylguanidine, and di-o-tolylguanidine.

Examples of the imidazole compounds include 1-methylimidazole, 1,2-dimethylimidazole, 1-methyl-2-ethylimidazole, 1-benzyl-2-methylimidazole, 1-benzyl-2-ethylimidazole, 1-benzyl-2-ethyl-5-methylimidazole, 1-benzyl-2-phenylimidazole, 1-benzyl-2-phenylimidazole trimellitic acid salt, 1-aminoethylimidazole, 1-aminoethyl-2-methylimidazole, 1-aminoethyl-2-ethylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 1-cyanoethyl-2-methylimidazole trimellitate, 1-cyanoethyl-2-phenylimidazole trimellitate, 1-cyanoethyl-2-ethyl-4-methylimidazole trimellitate, 1-cyanoethyl-2-undecyl-imidazole trimellitate, 2,4-diamino-6-[2'-methylimidazolyl-(1)'] ethyl-s-triazine isocyanuric acid adduct, 1-cyanoethyl-2-phenyl-4,5-di-(cyanoethoxy methyl) imidazole, N-(2-methyl imidazolyl-1-ethyl) urea, N,N'-bis-(2-methyl imidazolyl-1-ethyl) urea, 1-(cyanoethyl aminoethyl)-2-methyl imidazole, N,N'-[2-methyl imidazolyl-(1)-ethyl]-adipoyl diamide, N,N'-[2-methyl imidazolyl-(1)-ethyl]-dodecane dioyl diamide, N,N'-[2-methyl imidazolyl-(1)-ethyl]-eicosane dioyl diamide, 2,4-diamino-6-[2'-methyl imidazolyl-(1)']-ethyl-s-triazine, 2,4-diamino-6-[2'-undecyl imidazolyl-(1)']-ethyl-s-triazine, 1-dodecyl-2-methyl-3-benzyl imidazolium chloride, and 1,3-dibenzyl-2-methyl imidazolium chloride.

The content of the crosslinking agent may be, for example, 0.1 parts by mass or more, preferably 0.2 parts by mass or more, and more preferably 0.3 parts by mass or more, with respect to 100 parts by mass of the acrylic rubber. This tends to increase the crosslinking density and further improve the tensile strength of the cured rubber product. The content of the crosslinking agent may be, for example, 10 parts by mass or less, preferably 5 parts by mass or less, and more preferably 1 part by mass or less, with respect to 100 parts by mass of the acrylic rubber. This tends to improve the elongation at break of the cured rubber product.

The filler may have a function as a reinforcing material, for example. Examples of the filler include a carbon black, a silica, a clay, a talc and calcium carbonate. The filler is preferably a carbon black. Examples of the carbon black include an acetylene black, a ketchen black, a thermal black, a channel black, a furnace black, a lamp black, and a graphitized carbon black.

The filler content may be, for example, 20 parts by mass or more, preferably 30 parts by mass or more, and more preferably 40 parts by mass or more, with respect to 100 parts by mass of the acrylic rubber. This tends to further improve the tensile strength and hardness of the cured rubber product. The content of carbon black may be, for example, 100 parts by mass or less, preferably 80 parts by mass or less, and more preferably 60 parts by mass or less, with respect to 100 parts by mass of the acrylic rubber. This tends to further improve the elongation at break and heat resistance of the cured rubber product.

The crosslinkable rubber composition may further contain other components than those described above. Examples of other components include, for example, lubricants, crosslinking accelerators, anti-aging agents, plasticizers, stabilizers, and silane coupling agents.

Examples of the lubricant include a liquid paraffin, stearic acid, stearylamine, and a process oil.

The content of the lubricant may be, for example, 0.1 parts by mass or more, preferably 0.3 parts by mass or more, and more preferably 0.5 parts by mass or more, with respect to 100 parts by mass of the acrylic rubber. As a result, the crosslinkable rubber composition tends to be easily released from for example a molding machine, or a mold. The content of the lubricant may be, for example, 10 parts by mass or less, preferably 5 parts by mass or less, and more preferably 3 parts by mass or less, with respect to 100 parts by mass of the acrylic rubber. This tends to improve the oil resistance and heat resistance of cured rubber products.

As the crosslinking accelerator, a known crosslinking accelerator can be appropriately selected for example according to the type of the crosslinking agent. As the crosslinking accelerator, for example, a curing agent for an epoxy resin may be used. Examples of the crosslinking accelerator include pyrolyzed ammonium salts, organic acids, acid anhydrides, amines, sulfur, and sulfur compounds.

The content of the crosslinking accelerator may be, for example, 0.4 parts by mass or more, preferably 0.5 parts by mass or more, and more preferably 0.6 parts by mass or more, with respect to 100 parts by mass of the acrylic rubber. This tends to reduce the scorch time of the crosslinkable rubber composition. The content of the crosslinking accelerator may be, for example, 5 parts by mass or less, preferably 4 parts by mass or less, and more preferably 3 parts by mass or less, with respect to 100 parts by mass of the acrylic rubber. This tends to reduce the bridging torque at the same time.

As the anti-aging agent, a known anti-aging agent blended in an acrylic rubber-based rubber composition can be appropriately selected and used. Examples of the anti-aging agent include an amine-based anti-aging agent, an imidazole-based anti-aging agent, a carbamic acid metal salt, a phenol-based anti-aging agent, and a wax.

The content of the anti-aging agent may be, for example, 0.1 parts by mass or more, preferably 0.3 parts by mass or more, and more preferably 0.5 parts by mass or more, with respect to 100 parts by mass of the acrylic rubber. This tends to improve the heat resistance. The content of the anti-aging agent may be, for example, 20 parts by mass or less, preferably 10 parts by mass or less, and more preferably 5 parts by mass or less, with respect to 100 parts by

mass of the acrylic rubber. This tends to improve oil resistance.

(Cured rubber product)

The cured rubber product according to the present embodiment can be obtained by heat-curing the crosslinkable rubber composition described above.

The curing conditions of the crosslinkable rubber composition are not particularly limited. The curing temperature may be, for example, 150 to 200°C., and preferably 170 to 190°C. The curing time may be, for example, 5 minutes to 1 hour, and preferably 10 minutes to 30 minutes.

The cured rubber product according to the present embodiment maintains the high tensile strength even when held in a high temperature (for example, 175°C) for a long time (for example, 500 hours or more). Therefore, the cured rubber product according to the present embodiment can be preferably used as a rubber member exposed to a high temperature for a long time.

The cured rubber product according to the present embodiment can be suitably used for applications such as, for example, a hose member; a seal member such as a gasket and a packing; and a vibration-proofing member.

Examples of the hose member include a transmission oil cooler hose for automobiles, construction machines, hydraulic equipment, an engine oil cooler hose, an air duct hose, a turbo intercooler hose, a hot air hose, a radiator hose, a power steering hose, a fuel system hose, and a drain system hose.

The hose member may be a single-layer hose composed of the cured rubber product, and may be a multi-layer hose in which a layer composed of the cured rubber product is combined with an inner layer, an intermediate layer, or an outer layer which is composed of, for example, a fluororubber, a fluorine-modified acrylic rubber, a hydrin rubber, a nitrile rubber, a hydrogenated nitrile rubber, a chloroprene rubber, an ethylene-propylene rubber, a silicone rubber, or a chlorosulfonated polyethylene rubber. As is commonly practiced, the hose member may have reinforcing threads or wires provided in the intermediate or outermost layer of the rubber hose.

Examples of the seal member include an engine head cover gasket, an oil pan gasket, an oil seal, lip seal packing, an O-ring, a transmission seal gasket, a crankshaft, a camshaft seal gasket, a valve stem, a power steering seal belt cover seal, a boot material for a constant-velocity joint, and a rack-and-pinion boot material.

Examples of the vibration-proofing rubber member include a damper pulley, a center support cushion, and a suspension bush.

Embodiments of the present invention are described above, but the present invention is not limited to the above-described embodiments.

**Examples**

Hereinafter, the present invention will be described in more detail with reference to examples, but the present invention is not limited to these examples.

[Example A-1]

(Production of acrylic rubber)

An acrylic rubber was produced by the following method.

17 kg of an aqueous solution of a partially saponified polyvinyl alcohol (concentration: 4% by mass) and 22 g of sodium acetate were charged into a pressure-resistant reactor having an internal volume of 40 liters, and thoroughly mixed with a stirrer in advance to prepare a uniform slurry. After air in the upper part of the reactor was replaced with nitrogen, ethylene was injected into the upper part of the reactor to adjust the pressure at 50 kg/cm$^2$. After the inside of the reactor was maintained at 55°C, 9.0 kg of ethyl acrylate, 2.2 kg of n-butyl acrylate, 445 g of monobutyl butenedioate, 82 g of polyethylene glycol dimethacrylate (manufactured by Tokyo Chemical Industry Co., Ltd.), which is a bifunctional monomer, and 2.0 kg of an aqueous solution of t-butylhydroperoxide (concentration: 0.25% by mass) were charged from the charging port to initiate polymerization. During the reaction, the temperature in the reactor was maintained at 55°C, and the reaction was completed in 6 hours. 20 kg of an aqueous solution of sodium borate (concentration: 0.3% by mass) was added to the reacted polymerization liquid to solidify the polymer, which was dehydrated and dried to obtain an acrylic rubber. The acrylic rubber had a copolymer composition of 2 parts by mass of an ethylene unit, 1.8 parts by mass of a monobutyl butenedioate unit (MBM unit, crosslinking monomer unit), 78 parts by mass of an ethyl acrylate unit (EA unit), 16 parts by mass of an n-butyl acrylate unit (BA unit), and 0.7 parts by mass of a polyethylene glycol dimethacrylate unit (bifunctional monomer unit), and had a toluene insoluble content of 7.6% by mass.

(Production of crosslinkable rubber composition)

100 parts by mass of the acrylic rubber obtained by the above method, 50 parts by mass of a carbon black (trade name "Seast SO" manufactured by Tokai Carbon Co., Ltd.), 1 part by mass of a liquid paraffin (lubricant, trade name "Hycol K-230" manufactured by Kaneda Ltd.), 0.5 parts by mass of stearic acid (lubricant, trade name "Tsubaki stearate" manufactured by NOF Corporation), 1 part by mass of stearylamine (trade name "Furamine #80" manufactured by Kao Corporation), 1.6 parts by mass of an amine-based anti-aging agent (trade name "Nocrac CD" manufactured by Ouchi Shinko Chemical Industrial Co., Ltd.), 0.3 parts by mass of an imidazole-based anti-aging agent (trade name "Nocrac 810NA" manufactured by Ouchi Shinko Chemical Co., Ltd.), 0.4 parts by mass of a crosslinking agent (hexamethylenediamine carbide, trade name "Diak #1" manufactured by Dupont), and 1.6 parts by mass of a crosslinking accelerator (trade name "Rhenogran XLA-60" manufactured by Lanxess) were kneaded with an 8-inch open roll to obtain a crosslinkable rubber composition.

The resulting crosslinkable rubber composition was evaluated in the following manner. The results are shown in Table 1.

Measurement of scorch time

Using a test piece cut out from the crosslinkable rubber composition, the scorch time (t5) was measured in accordance with JIS K6300. The measurement was performed at 125°C.

Measurement of Δtorque

Using a test piece cut out from the crosslinkable rubber composition, a curve (crosslinking curve) showing the relationship between crosslinking time and torque was obtained in accordance with JIS K6300. Next, Δtorque was obtained by calculating (maximum torque value) - (minimum torque value) from the crosslinking curve. The measurement was performed at 170°C.

(Production of cured rubber product)

The crosslinkable rubber composition obtained by the above method was heat-treated in a hot press at 180°C for 20 minutes to obtain a primary crosslinked product, and then heat-treated in hot air (gear oven) at 185°C for 3 hours to obtain a cured rubber product.

The resulting cured rubber product was evaluated in the following manner. The results are shown in Table 2.

Measurement of 100% modulus, tensile strength, and elongation at break

The 100% modulus, tensile strength, and elongation at break were measured in accordance with JIS K6251.

Measurement of hardness

The hardness was measured using a durometer hardness tester in accordance with JIS K6253.

Heat resistance test (1)

Heat treatment was performed at 175°C for 504 hours in accordance with JIS K6257, and then the tensile strength, elongation at break, and hardness were measured in accordance with JIS K6251.

From the tensile strength and elongation at break of the test piece before the heat treatment and the tensile strength and elongation at break of the test piece after the heat treatment, the retention of tensile strength and the retention of elongation at break were determined by the following equations:

Retention ratio (%) = 100 × (measured value after heat treatment) / (measured value before heat treatment)

Heat resistance test (2)

Heat treatment was performed at 190°C for 94 hours in accordance with JIS K6257, and then the tensile strength, elongation at break, and hardness were measured in accordance with JIS K6251. From the tensile strength and elongation at break of the test piece before the heat treatment and the tensile strength and elongation at break of the test piece after the heat treatment, the retention ratio of the tensile strength and the retention ratio of the elongation

at break were determined by the above formula.

Cold resistance test

In accordance with JIS K6261, torsional rigidity was determined by twisting a test piece via a torsion wire over a temperature range from a freezing temperature to room temperature and measuring a torsion angle. The specific modulus is a value with respect to the modulus at 23 ± 2°C, and was calculated by the following equation:

Specific modulus (-) = ((180 - torsion angle at measurement temperature) / torsion angle at measurement temperature) / ((180- torsion angle at 23±2°C)/torsion angle at 23 ± 2°C)

The temperature at which the specific modulus becomes 10 can be obtained from the temperature and temperature-torsion angle curve with respect to the value of the specific modulus. An angle corresponding to a specific modulus of 10 was selected, and the temperature corresponding to this angle from the temperature-torsion angle curve obtained in the test was taken as the T10.

[Example A-2]

An acrylic rubber, a crosslinkable rubber composition, and a cured rubber product were produced in the same manner as in Example A-1 except that the amount of the bifunctional monomer added was changed to 164 g. In addition, the crosslinkable rubber composition and the cured rubber product were evaluated in the same manner as in Example A-1. The results are shown in Tables 1 and 2. The acrylic rubber of Example A-2 had a copolymer composition of 2 parts by mass of an ethylene unit, 1.8 parts by mass of a monobutyl butenedioate unit, 78 parts by mass of an ethyl acrylate unit, 16 parts by mass of an n-butyl acrylate unit, and 1.5 parts by mass of a polyethylene glycol dimethacrylate unit. The toluene insoluble content of the acrylic rubber of Example A-2 was 12.8% by mass.

[Example A-3]

An acrylic rubber, a crosslinkable rubber composition, and a cured rubber product were produced in the same manner as in Example A-1 except that the amount of the bifunctional monomer added was changed to 329 g. In addition, the crosslinkable rubber composition and the cured rubber product were evaluated in the same manner as in Example A-1. The results are shown in Tables 1 and 2. The acrylic rubber of Example A-3 had a copolymer composition of 2 parts by mass of an ethylene unit, 1.8 parts by mass of a monobutyl butenedioate unit, 78 parts by mass of an ethyl acrylate unit, 16 parts by mass of an n-butyl acrylate unit, and 2.9 parts by mass of a polyethylene glycol dimethacrylate unit. The toluene insoluble content of the acrylic rubber of Example A-3 was 33.1% by mass.

[Comparative Example a-1]

An acrylic rubber, a crosslinkable rubber composition, and a cured rubber product were produced in the same manner as in Example A-1 except that the bifunctional monomer was not used. In addition, the crosslinkable rubber composition and the cured rubber product were evaluated in the same manner as in Example A-1. The results are shown in Tables 1 and 2. The acrylic rubber of Comparative Example a-1 had a copolymer composition of 2 parts by mass of an ethylene unit, 1.8 parts by mass of a monobutyl butenedioate unit, 79 parts by mass of an ethyl acrylate unit, and 17 parts by mass of an n-butyl acrylate unit. The toluene insoluble content of the acrylic rubber of Comparative Example a-1 was 1.0% by mass.

[Comparative Example a-2]

An acrylic rubber and a crosslinkable rubber composition were produced in the same manner as in Example A-1 except that the amount of the bifunctional monomer added was changed to 768 g. The results are shown in Tables 1 and 2. The acrylic rubber of Comparative Example a-2 had a copolymer composition of 2 parts by mass of an ethylene unit, 1.8 parts by mass of a monobutyl butenedioate unit, 75 parts by mass of an ethyl acrylate unit, 14 parts by mass of an n-butyl acrylate unit, and 7 parts by mass of a polyethylene glycol dimethacrylate unit. The toluene insoluble content of the polymer obtained in Comparative Example a-2 was 65.3% by mass. In Comparative Example a-2, since it was difficult to obtain an acrylic rubber through an extrusion process, evaluation of a crosslinkable rubber composition and preparation of a cured rubber product were impossible.

[Comparative Example a-3]

An acrylic rubber, a crosslinkable rubber composition, and a cured rubber product were prepared in the same manner as in Example A-1, except that the amount of the bifunctional monomer added was changed to 5.5 g. The results are shown in Tables 1 and 2. The acrylic rubber of Comparative Example a-3 had a copolymer composition of 2 parts by mass of an ethylene unit, 1.8 parts by mass of a monobutyl butenedioate unit, 79 parts by mass of an ethyl acrylate unit, 17 parts by mass of an n-butyl acrylate unit, and 1.8 parts by mass of a polyethylene glycol dimethacrylate unit. The toluene insoluble content of the acrylic rubber of Comparative Example a-3 was 1.8% by mass.

[Table 1]

| | | Example A-1 | Example A-2 | Example A-3 | Comparative Example a-1 | Comparative Example a-2 | Comparative Example a-3 |
|---|---|---|---|---|---|---|---|
| Acrylic rubber | EA unit | 78 | 78 | 78 | 79 | 75 | 79 |
| | BA unit | 16 | 16 | 16 | 17 | 14 | 17 |
| | MBM unit | 1.8 | 1.8 | 1.8 | 1.8 | 1.8 | 1.8 |
| | ethylene unit | 2 | 2 | 2 | 2 | 2 | 2 |
| | Bifunctional monomer unit | 0.7 | 1.5 | 2.9 | - | 7 | 0.05 |
| | Toluene insoluble Content (% by mass) | 7.6 | 12.8 | 33.1 | <1.0 | 65.3 | 1.8 |
| Crosslinkable rubber composition | Viscosity | 50 | 52 | 58 | 53 | Not measurable | 54 |
| | Scorch time (t5) (min.) | 5.1 | 4.6 | 4.0 | 5.3 | | 5.1 |
| | Δtorque (kgf·cm) | 11.6 | 10.9 | 11.1 | 11.1 | | 11 |

[Table 2]

| | | Example A-1 | Example A-2 | Example A-3 | Comparative Example a-1 | Comparative Example a-2 | Comparative Example a-3 |
|---|---|---|---|---|---|---|---|
| Initial characteristics | 100% modulus (MPa) | 3.9 | 3.9 | 4.1 | 3.7 | Not measurable | 3.7 |
| | Tensile strength (MPa) | 11.4 | 11.8 | 12.3 | 12.3 | | 12.4 |
| | Elongation (%) | 293 | 304 | 279 | 316 | | 310 |
| | Hardness | 65 | 66 | 66 | 65 | | 65 |
| Heat resistance test (1) | Retention ratio of tensile strength (%) | 73 | 75 | 79 | 63 | | 64 |
| | Retention ratio of elongation (%) | 45 | 35 | 29 | 56 | | 54 |
| | Hardness | 88 | 88 | 89 | 85 | | 85 |
| Heat resistance test (2) | Retention ratio of tensile strength (%) | 100 | 98 | 95 | 89 | | 90 |
| | Retention ratio of elongation (%) | 82 | 72 | 70 | 79 | | 79 |
| | Hardness | 76 | 76 | 79 | 76 | | 76 |
| Cold resistance | Gehman T10 (°C) | -18 | -17 | -17 | -18 | | -18 |

[Example B-1]

(Production of acrylic rubber)

An acrylic rubber was produced by the following method.

17 kg of an aqueous solution of a partially saponified polyvinyl alcohol (concentration: 4% by mass) and 22 g of sodium acetate were charged into a pressure-resistant reactor having an internal volume of 40 liters, and thoroughly mixed with a stirrer in advance to prepare a uniform slurry. After air in the upper part of the reactor was replaced with nitrogen, ethylene was injected into the upper part of the reactor to adjust the pressure at 50 kg/cm$^2$. After the inside of the reactor was maintained at 55°C, 9.0 kg of ethyl acrylate, 2.2 kg of n-butyl acrylate, 390 g of monobutyl butenedioate, 98 g of ethylene glycol dimethacrylate (EGDMA) that is a bifunctional monomer, and 2.0 kg of an aqueous solution of t-butylhydroperoxide (concentration: 0.25% by mass) were charged from the charging port to initiate polymerization. During the reaction, the temperature in the reactor was maintained at 55°C, and the reaction was completed in 6 hours. 20 kg of an aqueous solution of sodium borate (concentration: 0.3% by mass) was added to the reacted polymerization liquid to solidify the polymer, which was dehydrated and dried to obtain an acrylic rubber. The acrylic rubber had a copolymer composition of 2 parts by mass of an ethylene unit, 1.5 parts by mass of a monobutyl butenedioate unit (MBM unit, crosslinking monomer unit), 78 parts by mass of an ethyl acrylate unit (EA unit), 16 parts by mass of an n-butyl acrylate unit (BA unit), and 1.2 parts by mass of a ethylene glycol dimethacrylate unit (bifunctional monomer unit), and had a toluene insoluble content of 24.3 % by mass.

(Production of crosslinkable rubber composition)

100 parts by mass of the acrylic rubber obtained by the above method, 50 parts by mass of a carbon black (trade name "Seast SO" manufactured by Tokai Carbon Co., Ltd.), 1 part by mass of a liquid paraffin (lubricant, trade name "Hycol K-230" manufactured by Kaneda Ltd.), 1 part by mass of stearic acid (lubricant, trade name "Tsubaki stearate" manufactured by NOF Corporation), 0.3 parts by mass of stearylamine (trade name "Furamine #80" manufactured by Kao Corporation), 0.5 parts by mass of an amine-based anti-aging agent (trade name "Nocrac CD" manufactured by Ouchi Shinko Chemical Industrial Co., Ltd.), 1.6 parts by mass of an imidazole-based anti-aging agent (trade name "Nocrac 810NA" manufactured by Ouchi Shinko Chemical Co., Ltd.), 0.4 parts by mass of a crosslinking agent (hexamethylenediamine carbide, trade name "Diak #1" manufactured by Dupont), and 0.8 parts by mass of a crosslinking accelerator (trade name "Rhenogran XLA-60" manufactured by Lanxess) were kneaded with an 8-inch open roll to obtain a crosslinkable rubber composition. The obtained crosslinkable rubber composition was evaluated in the same manner as in Example A-1. The results are shown in Table 3.

(Production of cured rubber product)

The crosslinkable rubber composition obtained by the above method was heat-treated in a hot press at 180°C for 20 minutes to obtain a primary crosslinked product, and then heat-treated in hot air (gear oven) at 185°C for 3 hours to obtain a cured rubber product. The obtained cured rubber product was evaluated in the same manner as in Example A-1. The results are shown in Table 4.

[Example B-2]

An acrylic rubber, a crosslinkable rubber composition, and a cured rubber product were produced in the same manner as in Example B-1 except that 120 g of diethylene glycol dimethacrylate (DEGDM) was charged instead of 164 g of ethylene glycol dimethacrylate (EGDMA) as the bifunctional monomer. In addition, the crosslinkable rubber composition and the cured rubber product were evaluated in the same manner as in Example B-1. The acrylic rubber of Example B-2 had a copolymer composition of 2 parts by mass of an ethylene unit, 1.5 parts by mass of a monobutyl butenedioate unit, 78 parts by mass of an ethyl acrylate unit, 16 parts by mass of an n-butyl acrylate unit, and 1.4 parts by mass of a diethylene glycol dimethacrylate unit. The toluene insoluble content of the acrylic rubber of Example B-2 was 17.3% by mass.

[Example B-3]

An acrylic rubber, a crosslinkable rubber composition, and a cured rubber product were produced in the same manner as in Example B-1 except that 164 g of polyethylene glycol dimethacrylate (PEGDM) (manufactured by Tokyo Kasei Kogyo Co., Ltd., n is 4) was charged instead of ethylene glycol dimethacrylate (EGDMA) as the bifunctional monomer. In addition, the crosslinkable rubber composition and the cured rubber product were evaluated in the same manner as in Example B-1. The acrylic rubber of Example B-3 had a copolymer composition of 2 parts by mass of an ethylene unit, 1.5 parts by mass of a monobutyl butenedioate unit, 78 parts by mass of an ethyl acrylate unit, 16 parts by mass of an n-butyl acrylate unit, and 2 parts by mass of a polyethylene glycol dimethacrylate unit. The toluene insoluble content of the acrylic rubber of Example B-3 was 28.8% by mass.

[Example B-4]

An acrylic rubber, a crosslinkable rubber composition, and a cured rubber product were produced in the same manner as in Example B-1 except that 273 g of polyethylene glycol dimethacrylate (PEGDM) (manufactured by ALDRICH CO., n is 9) was charged instead of ethylene glycol dimethacrylate (EGDMA) as the bifunctional monomer. In addition, the crosslinkable rubber composition and the cured rubber product were evaluated in the same manner as in Example B-1. The acrylic rubber of Example B-4 had a copolymer composition of 2 parts by mass of an ethylene unit, 1.5 parts by mass of a monobutyl butenedioate unit, 78 parts by mass of an ethyl acrylate unit, 16 parts by mass of an n-butyl acrylate unit, and 3.3 parts by mass of a polyethylene glycol dimethacrylate unit. The toluene insoluble content of the acrylic rubber of Example B-4 was 33.4% by mass.

[Comparative Example b-1]

An acrylic rubber and a crosslinkable rubber composition were produced in the same manner as in Example B-3 except that ethylene was not charged. The acrylic rubber of Comparative Example b-1 had a copolymer composition

of 1.5 parts by mass of a monobutyl butenedioate unit, 79 parts by mass of an ethyl acrylate unit, 17 parts by mass of an n-butyl acrylate unit, and 2 parts by mass of a polyethylene glycol dimethacrylate unit. The toluene insoluble content of the acrylic rubber of Comparative Example b-1 was 20.4% by mass.

[Comparative Example b-2]

An acrylic rubber, a crosslinkable rubber composition, and a cured rubber product were prepared in the same manner as in Example B-3, except that monobutyl butenedioate was not charged. In addition, the crosslinkable rubber composition was evaluated in the same manner as in Example B-1. The acrylic rubber of Comparative Example b-2 had a copolymer composition of 2 parts by mass of an ethylene unit, 79 parts by mass of an ethyl acrylate unit, 17 parts by mass of an n-butyl acrylate unit, and 2 parts by mass of a polyethylene glycol dimethacrylate unit. The toluene insoluble content of the acrylic rubber of Comparative Example b-2 was 24.7% by mass. It was difficult to evaluate the crosslinkable rubber composition of Comparative Example b-2 and produce a cured rubber product thereof, since the vulcanization torque did not increase and crosslinking did not occur.

[Table 3]

| | | Example B-1 | Example B-2 | Example B-3 | Example B-4 | Comparative Example b-1 | Comparative Example b-2 |
|---|---|---|---|---|---|---|---|
| Acrylic rubber | EA unit | 78 | 78 | 78 | 78 | 79 | 79 |
| | BA unit | 16 | 16 | 16 | 16 | 17 | 17 |
| | MBM unit | 1.5 | 1.5 | 1.5 | 1.5 | 1.5 | 0 |
| | Ethylene unit | 2 | 2 | 2 | 2 | 0 | 2 |
| | Bifunctional monomer unit | 1.2 | 1.4 | 2 | 3.3 | 2 | 2 |
| | Bifunctional monomer | EGDMA (n=1) | DEGDM (n=2) | PEGDM (n=4) | PEGDM (n=9) | PEGDM (n=4) | PEGDM (n=4) |
| | Toluene insoluble content (% by mass) | 24.3 | 17.3 | 28.8 | 33.4 | 20.4 | 24.7 |
| Crosslinkable rubber composition | Viscosity | 52 | 49 | 51 | 55 | 37 | 50 |
| | Scorch time (t5) (min.) | 6.5 | 7.0 | 6.5 | 4.1 | 10.4 | Not measurable |
| | Δtorque (kgf·cm) | 9.5 | 9.4 | 9.5 | 10.2 | 17.4 | |

[Table 4]

| | | Example B-1 | Example B-2 | Example B-3 | Example B-4 | Comparative Example b-1 | Comparative Example b-2 |
|---|---|---|---|---|---|---|---|
| Initial characteristics | 100% modulus (MPa) | 3.2 | 3.2 | 3.0 | 3.1 | 2.4 | Not producable |
| | Tensile strength (MPa) | 11.8 | 11.4 | 11.7 | 11.8 | 8.2 | |
| | Elongation (%) | 348 | 361 | 362 | 310 | 296 | |
| | Hardness | 66 | 67 | 67 | 63 | 69 | |
| Heat resistance test (1) | Retention ratio of tensile strength (%) | 71 | 75 | 83 | 95 | 95 | |
| | Retention ratio of elongation (%) | 76 | 71 | 55 | 48 | 55 | |
| | Hardness | 83 | 83 | 83 | 82 | 85 | |
| Heat resistance test (2) | Retention ratio of tensile strength (%) | 89 | 92 | 95 | 98 | 110 | |
| | Retention ratio of elongation (%) | 80 | 80 | 72 | 69 | 72 | |
| | Hardness | 77 | 77 | 75 | 74 | 81 | |
| Cold resistance | Gehman T10 (°C) | -18 | -18 | -18 | -19 | -15 | |

## Claims

**1.** An acrylic rubber comprising:

an alkyl acrylate unit;
a crosslinking monomer unit having a halogeno group, an epoxy group, or a carboxyl group;
a unit of a bifunctional monomer represented by the following formula (A-1):

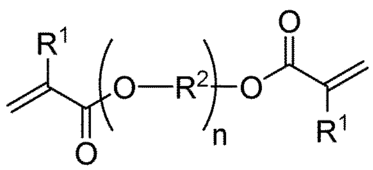 (A-1)

wherein n represents 1 to 9, $R^1$ represents a hydrogen atom or a methyl group, and $R^2$ represents an alkanediyl group having 2 to 4 carbon atoms; and
an ethylene unit,

wherein a content of the ethylene unit is 0.1 to 10 parts by mass with respect to 100 parts by mass of the alkyl acrylate unit,
wherein the acrylic rubber has a toluene insoluble content of 4 to 40% by mass; and
wherein the toluene insoluble content is calculated from the following equation:

$$\text{toluene insoluble content (\% by mass)} = (x / 0.2) \times 100$$

wherein x (g) is the dried solid content (toluene insoluble content) which is weighed by immersing 0.2 g of the acrylic rubber in toluene in 100ml, leaving it at 23°C for 24 hours, filtering it using a 200 mesh wire netting, and drying the filter cake at 120°C for 1 hour.

**2.** The acrylic rubber according to claim 1, wherein the alkyl acrylate unit comprises a first alkyl acrylate unit having an alkyl group having 1 to 3 carbon atoms and a second alkyl acrylate unit having an alkyl group having 4 to 8 carbon atoms.

**3.** The acrylic rubber according to claim 2, wherein a content of the first alkyl acrylate unit is 60 to 95% by mass and a content of the second alkyl acrylate is 5 to 40% by mass, based on the total amount of the alkyl acrylate unit.

**4.** The acrylic rubber according to any one of claims 1 to 3, wherein a content of the unit of the bifunctional monomer is 0.1 to 5 parts by mass with respect to 100 parts by mass of the alkyl acrylate unit.

**5.** The acrylic rubber according to any one of claims 1 to 4, wherein a content of the crosslinking monomer unit is 0.5 to 10 parts by mass with respect to 100 parts by mass of the alkyl acrylate unit.

**6.** A crosslinkable rubber composition comprising:

the acrylic rubber according to any one of claims 1 to 5;
a crosslinking agent; and
a filler.

**7.** The crosslinkable rubber composition according to claim 6, wherein the filler comprises a carbon black.

**8.** A cured rubber product that is a cured product of the crosslinkable rubber composition according to claim 6 or 7.

**9.** A hose member comprising the cured rubber product according to claim 8.

**10.** A seal member comprising the cured rubber product according to claim 8.

**11.** A vibration-proofing rubber member comprising the cured rubber product according to claim 8.

## Patentansprüche

**1.** Acrylkautschuk, umfassend:

eine Alkylacrylateinheit,
eine vernetzende Monomereinheit mit einer Halogengruppe, einer Epoxygruppe oder einer Carboxylgruppe,
eine Einheit eines bifunktionellen Monomers, dargestellt durch die folgende Formel (A-1):

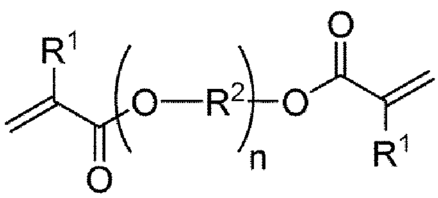

(A-1)

worin n 1 bis 9 darstellt, $R^1$ ein Wasserstoffatom oder eine Methylgruppe darstellt und $R^2$ eine Alkandiylgruppe mit 2 bis 4 Kohlenstoffatomen darstellt, und
eine Ethyleneinheit,
wobei ein Gehalt der Ethyleneinheit 0,1 bis 10 Masseteile in Bezug auf 100 Masseteile der Alkylacrylateinheit beträgt,
wobei der Acrylkautschuk einen in Toluol unlöslichen Gehalt von 4 bis 40 Masse-% aufweist und
wobei der in Toluol unlösliche Gehalt aus der folgenden Gleichung berechnet wird:

$$\text{In Toluol unlöslicher Gehalt (Masse-\%)} = (x/0{,}2) \times 100,$$

worin x (g) der getrocknete Feststoffgehalt (in Toluol unlöslicher Gehalt) ist, der gewogen wird, indem 0,2 g des Acrylkautschuks in Toluol in 100 ml eingetaucht werden, dies bei 23°C für 24 Stunden stehengelassen wird, dies unter Verwendung eines 200 Mesh-Drahtnetzes gefiltert wird und der Filterkuchen bei 120°C für 1 Stunde getrocknet wird.

**2.** Acrylkautschuk gemäß Anspruch 1, wobei die Alkylacrylateinheit eine erste Alkylacrylateinheit mit einer Alkylgruppe mit 1 bis 3 Kohlenstoffatomen und eine zweite Alkylacrylateinheit mit einer Alkylgruppe mit 4 bis 8 Kohlenstoffatomen umfasst.

**3.** Acrylkautschuk gemäß Anspruch 2, wobei, bezogen auf die Gesamtmenge der Alkylacrylateinheit, ein Gehalt der ersten Alkylacrylateinheit 60 bis 95 Masse-% beträgt und ein Gehalt des zweiten Alkylacrylats 5 bis 40 Masse-% beträgt.

**4.** Acrylkautschuk gemäß einem der Ansprüche 1 bis 3, wobei ein Gehalt der Einheit des bifunktionellen Monomers 0,1 bis 5 Masseteile in Bezug auf 100 Masseteile der Alkylacrylateinheit beträgt.

**5.** Acrylkautschuk gemäß einem der Ansprüche 1 bis 4, wobei ein Gehalt der vernetzenden Monomereinheit 0,5 bis 10 Masseteile in Bezug auf 100 Masseteile der Alkylacrylateinheit beträgt.

**6.** Vernetzbare Kautschukzusammensetzung, umfassend:

Den Acrylkautschuk gemäß einem der Ansprüche 1 bis 5,
ein Vernetzungsmittel und
einen Füllstoff.

**7.** Vernetzbare Kautschukzusammensetzung gemäß Anspruch 6, wobei der Füllstoff einen Ruß umfasst.

**8.** Gehärtetes Kautschukprodukt, das ein gehärtetes Produkt der vernetzbaren Kautschukzusammensetzung gemäß Anspruch 6 oder 7 ist.

**9.** Schlauchelement, umfassend das gehärtete Kautschukprodukt gemäß Anspruch 8.

**10.** Dichtungselement, umfassend das gehärtete Kautschukprodukt gemäß Anspruch 8.

**11.** Vibrationsschützendes Kautschukelement, umfassend das gehärtete Kautschukprodukt gemäß Anspruch 8.

## Revendications

**1.** Caoutchouc acrylique comprenant :

une unité acrylate d'alkyle ;
une unité monomère de réticulation présentant un groupe halogéno, un groupe époxy, ou un groupe carboxyle ;
une unité d'un monomère bifonctionnel représenté par la formule (A-1) suivante :

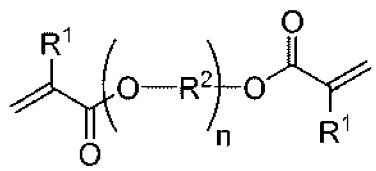

(A-1)

dans lequel n représente 1 à 9, $R^1$ représente un atome d'hydrogène ou un groupe méthyle, et $R^2$ représente un groupe alcanediyle présentant 2 à 4 atomes de carbone ; et
une unité éthylène,
dans lequel une teneur de l'unité éthylène est de 0,1 à 10 parties en masse par rapport à 100 parties en masse de l'unité acrylate d'alkyle,
dans lequel le caoutchouc acrylique présente une teneur en matières insolubles dans le toluène de 4 à 40 % en masse ; et
dans lequel la teneur en matières insolubles dans le toluène est calculée d'après l'équation suivante :

$$\text{teneur en matières insolubles dans le toluène (\% en masse)} = (x / 0{,}2) \times 100$$

dans lequel x (g) est la teneur en matières solides séchées (teneur en matières insolubles dans le toluène) qui est pesée en immergeant 0,2 g du caoutchouc acrylique dans du toluène dans 100 ml, en le laissant à 23 °C pendant 24 heures, en le filtrant en utilisant un maillage métallique de 200 mesh, et en séchant le gâteau de filtre à 120 °C pendant 1 heure.

2. Caoutchouc acrylique selon la revendication 1, dans lequel l'unité acrylate d'alkyle comprend une première unité acrylate d'alkyle présentant un groupe alkyle présentant 1 à 3 atomes de carbone et une seconde unité acrylate d'alkyle présentant un groupe alkyle présentant 4 à 8 atomes de carbone.

3. Caoutchouc acrylique selon la revendication 2, dans lequel une teneur de la première unité acrylate d'alkyle est de 60 à 95 % en masse et une teneur du second acrylate d'alkyle est de 5 à 40 % en masse, sur la base de la quantité totale de l'unité acrylate d'alkyle.

4. Caoutchouc acrylique selon l'une quelconque des revendications 1 à 3, dans lequel une teneur de l'unité du monomère bifonctionnel est de 0,1 à 5 parties en masse par rapport à 100 parties en masse de l'unité acrylate d'alkyle.

5. Caoutchouc acrylique selon l'une quelconque des revendications 1 à 4, dans lequel une teneur de l'unité monomère de réticulation est de 0,5 à 10 parties en masse par rapport à 100 parties en masse de l'unité acrylate d'alkyle.

6. Composition de caoutchouc réticulable comprenant :

le caoutchouc acrylique selon l'une quelconque des revendications 1 à 5 ;
un agent de réticulation ; et
une charge.

7. Composition de caoutchouc réticulable selon la revendication 6, dans laquelle la charge comprend un noir de carbone.

8. Produit durci en caoutchouc qui est un produit durci de la composition de caoutchouc réticulable selon la revendication 6 ou la revendication 7.

9. Élément de tuyau comprenant le produit durci en caoutchouc selon la revendication 8.

10. Élément d'étanchéité comprenant le produit durci en caoutchouc selon la revendication 8.

11. Élément en caoutchouc anti-vibration comprenant le produit durci en caoutchouc selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002265737 A
- JP 2010070713 A
- WO 2019078167 A